# EUROPEAN PATENT APPLICATION

(11) **EP 2 099 155 A1**
(43) Date of publication of application: **09.09.2009**
(21) Application number: 07817141.0
(22) Date of filing: 24.10.2007
(51) Int. Cl.: H04L 12/16

(54) **METHOD AND SYSTEM FOR PROCESSING CLIENT REQUEST**

(30) Priority: 27.12.2006 CN 200610168385
(71) Applicant: Huawei Technologies Co., Ltd., Longgang District, Shenzhen Guangdong 518129 (CN)
(72) Inventor: ZHOU, Zhaoqi, Shenzhen Guangdong 518129 (CN)
(74) Representative: Thun, Clemens
(86) International application number: PCT/CN2007/070950
(87) International publication number: WO 2008/077325

(57) **Abstract**

A method for processing customer requests includes: generating a service request according to a business subscribed by a customer, wherein the service request carries service request information; acquiring business attribute information required in business processing corresponding to the service request, according to the service request information; and determining a corresponding business processing unit according to the acquired business attribute information, so as to process the subscribed business. A system for processing customer requests is also disclosed. With the present invention, the quality of service may be guaranteed and the satisfaction degree of the customer may be improved.

## Description

### FIELD OF THE INVENTION

The present invention relates to information processing technology, and more particularly, to a method and system for processing service requests from customers.

### BACKGROUND

A customer service center, as an interface for customer service, accepts a service request sent by a customer via various paths such as telephone, Web, E-mail, and short message service (SMS). The type of the service request may be information query, business consultation, business handling, complaint, fault report and active services, etc. For different types of service requests, different business specialist systems need to be invoked by a business representative to execute business processing.

The business representative, in a sense, refers to an operator serving in the customer service center, and a channel for communicating between corporations and customers may be generated by the business representative. At present, when the business representative processes a service request, a business specialist system for processing the service request needs to be found manually based on the type of the service request, while the corresponding business processing page also needs to be found.

For the business representative, how to accurately and timely process the accepted service request is a key to reflect the quality of service, response speed and efficiency of solving the customer's problem.

Because the business representative's capability of processing a service request from a customer is highly associated with its familiarity and capability of the service. For a business representative with low familiarity, it is impossible to quickly process the service request. Thus, the processing efficiency of the service is reduced, and thus the quality of service is also reduced. Further, the business representative needs to manually activate a processing page of the corresponding business according to the service request. As a result, the time for handling the service request increases, and the quality of service is reduced. Thus, the customer's trust on the service may be reduced, so that the development of the businesses will be influenced.

### SUMMARY

In view of this, embodiments of the present invention provide a method for processing customer requests, which is capable of guaranteeing the quality of service.

The embodiments of the present invention also provide a system for processing customer requests, which is also capable of guaranteeing the quality of service.

In order to achieve the above objects, the solution of the present invention may be embodied as follows.

A method for processing a customer request includes: generating a service request according to a business subscribed by a customer, wherein the service request carries service request information; acquiring business attribute information required in business processing corresponding to the service request, according to the service request information; and determining a corresponding business processing unit according to the acquired business attribute information to process the subscribed business.

A system for processing a service request includes: a service request processing unit, a service request task processing unit and a business processing unit.

The service request processing unit is adapted to receive a business subscription, and generate a service request according to the subscribed business, wherein the service request carries service request information.

The service request task processing unit is adapted to acquire business attribute information required in business processing corresponding to the service request, from the service request information carried in the service request generated by the service request processing unit, and determine a corresponding business processing unit according to the acquired business attribute information.

The business processing unit is adapted to process the subscribed business.

According to the above-mentioned solution, the embodiments of the present invention discloses that as long as the business representative sets a service request, according to the information provided by a customer and business-related information provided by an existing system, the system provided by the embodiments of the present invention may automatically adapt a corresponding business, by using the method provided by the embodiments of the present invention, according to service request information, and activate the corresponding business to process the business subscribed by the customer. Thus, the business representative according to the embodiments of the present invention does not need to manually process the business specialist system of the service request, and also does not need to manually find a corresponding business processing page. Thus, the reduction of the quality of service due to the capability difference of the business representatives may be avoided, and the processing of locating and addressing a service request from a customer may be accelerated. Thereby, it is possible to reduce the time for handling the service request, guarantee the quality of service, and improve the satisfaction degree of the customer.

### BRIEF DESCRIPTION OF THE DRAWINGS

Fig. 1 is a schematic diagram of the constitution of a system according to an embodiment of the present invention;

Fig. 2 is a schematic diagram of the constitution of a service request task processing unit in the system according to the embodiment of the present invention;

Fig. 3 is a flowchart of a method according to an embodiment of the present invention;

Fig. 4 is a flowchart of another embodiment of processing a service request from a customer according to present invention; and

Fig. 5 is a flowchart of another embodiment of processing a service request from a customer according to present invention.

### DETAILED DESCRIPTION

The method provided by the embodiments of the present invention includes:
generating a service request according to a business subscribed by a customer; acquiring business attribute information required in business processing corresponding to the service request, according to service request information carried in the generated service request; and
determining a corresponding business processing system according to the acquired business attribute information.

The objects, solutions and advantages of the present invention will become apparent from the detailed description below with reference to the accompany figures and embodiments.

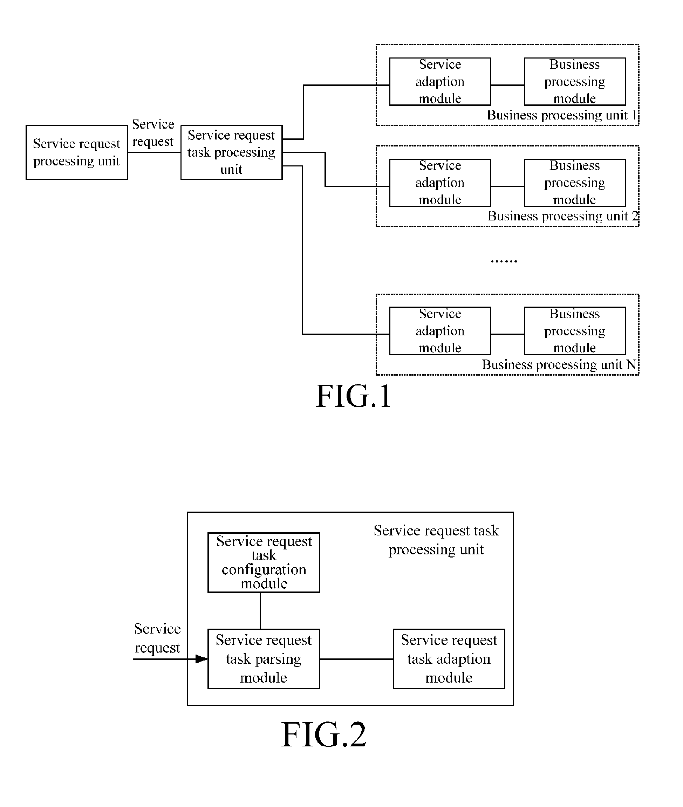

Fig.1 is a schematic diagram of the constitution of a system according to an embodiment of the present invention. As shown in Fig.1, the system includes a service request processing unit, a service request task processing unit and a business processing unit.

The service request processing unit is adapted to receive a business subscription from a customer, generate a service request according to the subscribed business, and transfer the generated service request to the service request task processing unit. The service request processing unit is further adapted to update the processing status of the service request, receive a business processing completion notification from a corresponding business processing unit, and close the service request.

The service request task processing unit is adapted to receive the service request from the service request processing unit, determine business attribute information required in business processing for the service request according to service request information carried in the service request, acquire a task required to be carried out for processing the service request, and send a business request to the business processing unit.

The business processing unit is adapted to receive the business request from the service request task processing unit, and activate a business corresponding to the business attribute information. The number of the business processing units is one or more. The business processing unit may include a service adaption module and a business processing module configured to process a business.

The service adaption module is adapted to receive the business request from the service request task processing unit, and activate the business corresponding to the business request.

The business processing module is adapted to process the activated business.

Thus, the business representative processes the corresponding service request for the customer via the activated business page.

Fig.2 is a schematic diagram of the constitution of a service request task processing unit in the system according to the present invention. As shown in Fig.2, the service request task processing unit mainly includes a service request task configuration module, a service request task parsing module and a service request task adaption module.

The service request task configuration module is adapted to pre-configure and store business attribute information items included in different businesses respectively, and pre-configure and store a task corresponding to the business attribute information items in respective businesses. For each business, which are pre-configured is that the business attribute information required for processing each business and the task corresponding to the business attribute information required for each business.

The service request task parsing module is adapted to receive the service request from the service request processing unit, acquire business attribute information required in business processing for the received service request from the service request information carried in the service request according to the pre-configured and stored business attribute information items included in the different businesses, and send an adaption request carrying the business attribute information to the service request task adaption module.

The service request task adaption module is adapted to receive the adaption request from the service request task parsing module, determine a task required to be carried out for the corresponding business attribute information according to the task corresponding to the business attribute information, and send a business request to the business processing unit.

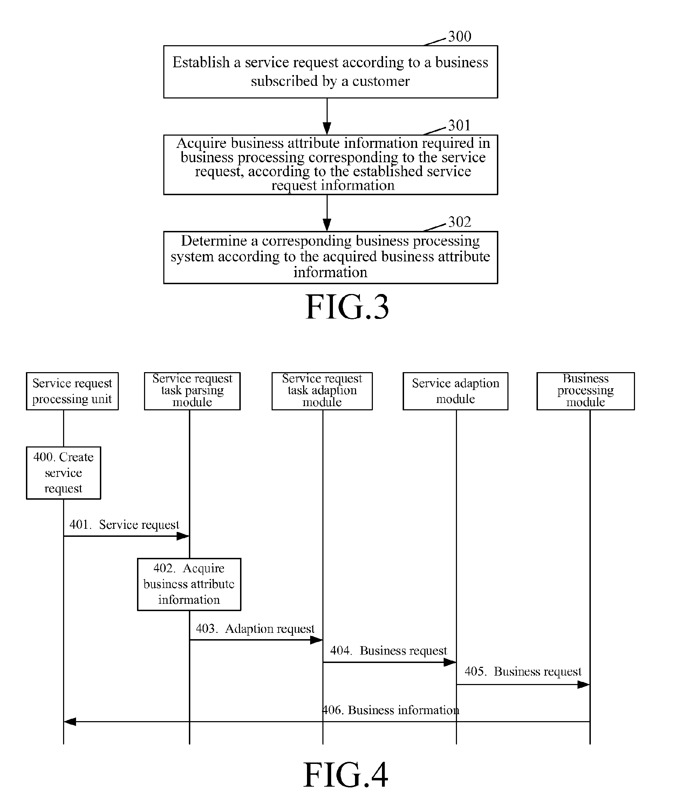

Fig. 3 is a flowchart of a method according to an embodiment of the present invention. As shown in Fig. 3, the method of the present invention includes the following steps.

Step 300: A service request is generated according to a business subscribed by a customer.

The step may be implemented as follows. After receiving the business subscription from the customer, a business representative generates the service request according to the business subscribed by the customer. The service request information carried in the service request includes, but not limited to, the following:
status corresponding to the service request, such as creating, submitting, checking, being processing, and feedback;
a channel through which the customer requests a business subscription, such as a call center, and a self service and the way of receiving the subscription. The way of receiving the subscription may include voice, web, wireless Application Protocol (WAP), E-mail, SMS, and Video;
customer information including the home information of the customer, the product associated with the business subscription subscribed by the customer;
service level, such as service level agreement (SLA) subscribed with the customer;
service classes, such as information query, business consultation, business handling, complaint suggestions, and active services;
impact, such as the number of the customers and businesses influenced by the subscribed business, may include the deviation degree from the normal service level;
urgency, such as the processing delay for the customer to be accepted when processing the business subscribed by the customer;
priority, such as the priority for processing the service request determined based on the urgency and impact.

The above service request information may be originated from the existing system or provided by the customer. For example, the information related to the customer, such as home information of the customer, and service level, may be acquired from the billing system.

Step 301: Business attribute information required in business processing for the service request is acquired according to the generated service request information.

The method also includes, before the step 301, a step of pre-configuring business attribute information items included in different businesses respectively.

At this step, the business attribute information corresponding to the subscribed business may be acquired from the service request information, according to the pre-configured business attribute information items included in the different businesses.

Step 302: A corresponding business processing unit is determined according to the acquired business attribute information.

Thus, the business subscribed by the customer may be processed after a page of determined business is activated.

Further, the method also includes: updating the processing status of the service request; alternatively, closing the corresponding service request after the business processing is completed.

The implementation of the method according to the present invention will be described in combination with the specific example message. Fig.4 is a flowchart of an embodiment for processing a service request from a customer according to the present invention. As shown in Fig. 4, the method includes the flowing steps.

Step 400: The service request processing unit generates a service request.

In this embodiment, it is assumed that the business subscribed by the customer is to activate the value-added service of receiving call package per month. A business representative generates a service request for activating the receiving call package per month, and the service request information carried in the service request includes business attribute information related to the business subscribed by the customer, such as customer information, service level and service class. For example, the service class is embodied as turning on receiving call package per month.

Step 401: The service request processing unit sends the service request to the service request task parsing module.

Step 402: The service request task parsing module acquires the business attribute information.

At this step, the service request task resolving module acquires the business attribute information corresponding to the subscribed business from the received service request information, according to the pre-configured business attribute information items included in the different businesses. In this embodiment, it is assumed that the pre-configured business attribute information items included in the value-added service of receiving call package per month include service class, handling number, service level, priority level, status, the channel through which the customer makes a business subscription, and the way of receiving the business subscription. The business attribute information corresponding to the subscribed business acquired from the received service request information may be that: the service class is turning on receiving call package per month, the handling number is 13911012356, the service level is golden-brand service, the priority level is high level, the status is creating, the channel through which the customer makes the business subscription is a call center, the way of receiving business subscription is a telephone, etc.

Further, the business attribute information also includes the execution number of the task to be executed. If the task is executed once, the corresponding execution number is added by 1. This means that the task weight value corresponding to the task is higher. The business administrator may adjust the configuration of the service request task according to the weight value. For example, if a certain task weight value is high, i.e., the number of use is large, the business administrator may adjust the execution order of the task to a former position, i.e., the priority level is high level. For a task with a lower weight value, the business administrator may consider whether the task need to be executed, or whether the content of the task to be executed need to be modified, etc.

Step 403-Step 404: The service request task parsing module sends an adaption request to the service request task adaption module. After the completion of the adaption, the service request task adaption module sends a business request to the service adaption module.

At this step, the business attribute information required in business processing corresponding to the service request is carried in the adaption request. The service request task adaption module determines the task required to be executed corresponding to the received business attribute information according to the task corresponding to the pre-configured business attribute information, and sends a business request to the business processing unit.

Step 405-Step 407: The service adaption module receives the business request, activates a page corresponding to the business according to the relevant parameters corresponding to the business carried in the business request, processes the activated business, and returns business processing information to the service request processing unit.

At this step, the relevant parameters corresponding to the business mainly include a business interface parameter. If the task is invoked and activated by using a function invoking method, the business interface parameter refers to function entry address.

Therefore, the business representative activates the subscribed business for the customer by the activated business page.

It is noted that, for a service request, according to its different business attribute information, one or more tasks may need to be executed, so as to implement the subscribed business. At this time, the execution order of different tasks may need to be set, and an order sign for identifying the execution order of different tasks may be further added into the business attribute information.

In this present invention, as long as a business representative sets a service request, according to the information provided by a customer and business-related information provided by an existing system, service request information requested by different businesses, the system according to the method provided by the present invention may automatically adapt a corresponding business according to service request information, and activate the corresponding business to process the business subscribed by the customer. Thus, the business representative according to the present invention does not need to manually process the business specialist system of the service request, and also does not need to manually search for a corresponding business processing page. Thus, the reduction of the quality of service due to the capability difference of the business representatives may be avoided. Thereby, it is possible to accelerate processing of a service request from a user, reduce the time for handling the service request, and improve the satisfaction degree of the customer.

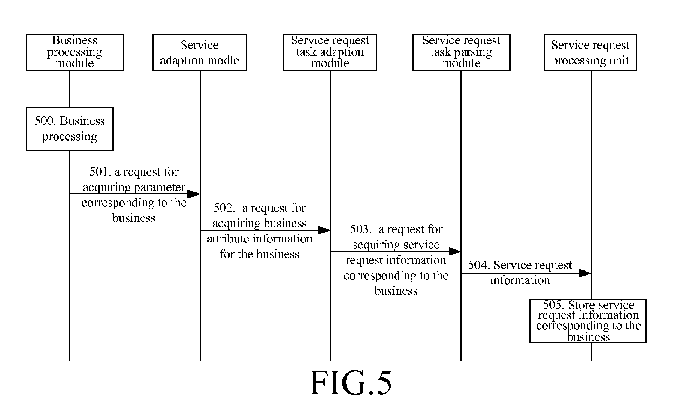

Further, during the processing of the business, a business representative according to the present invention creates and stores the responded service request information, so that other business representatives may refer to it when the same business subscription occurs, which reduces the repeated work of the business representative. Fig.5 is a flowchart of another embodiment for processing a service request from a customer according to the present invention. As shown in Fig.5, the following steps are included.

Step 500: The business representative processes a business subscribed by a customer via the business processing module.

According to the flowchart shown in Fig.4, the business representative processes the business subscribed by the customer.

This step may also be that the business representative processes the business subscribed by the customer via existing methods.

Step 501: The business processing module of the business processing unit sends to the service adaption module a request for acquiring the parameter corresponding to the business so as to acquire the related parameters corresponding to the current activated business.

Step 502: The service adaption module sends to the service request task adaption module a request for acquiring business attribute information corresponding to the business. The service request task adaption module determines the business attribute information corresponding to the activated current business, according to a task corresponding to the pre-configured business attribute information.

Step 503-Step 504: The service request task adaption module sends to the service request task parsing module a request for acquiring service request information corresponding to the business. The service request task parsing module generates service request information according to the business attribute information corresponding to the current activated business, and sends the service request information to the service request processing unit.

Step 505: The service request processing unit stores the service request information corresponding to the current activated business.

Further, the service request processing unit displays to the business representative service request information corresponding to different businesses respectively.

It can be easily seen that, according to the flowchart shown in Fig.5 of the present invention, other business representatives may conveniently generate a service request for a corresponding business, according to the stored business and history information corresponding to the service request information.

The above are only exemplary embodiments of the present invention, not for limiting the protection scope of the present invention. Any modifications, equivalent replacements and improvements without depart from the scope of the present invention should fall into the protection scope of the present invention.

## Claims

1. A method for processing customer requests, comprising:
generating a service request according to a business subscribed by a customer, wherein the service request carries service request information;
acquiring business attribute information required in business processing corresponding to the service request, according to the service request information; and
determining a corresponding business processing unit according to the acquired business attribute information, so as to process the subscribed business.

2. The method of claim 1, before the method, further comprising:
pre-configuring business attribute information items included in different businesses respectively; and
wherein the step of acquiring the business attribute information comprises:
acquiring the business attribute information corresponding to the subscribed business from the service request information, according to the pre-configured business attribute information items included in the different businesses.

3. The method of claim 2, before the method, further comprising:
pre-configuring a task corresponding to the business attribute information; and
wherein the step of determining the corresponding business processing unit comprises:
determining a task required to be executed corresponding to the acquired business attribute information, according to the pre-configured task corresponding to the business attribute information; and
activating a page corresponding to the business, according to a related parameter corresponding to the task required to be executed.

4. The method of claim 3, wherein the related parameter corresponding to the task comprises a business interface parameter.

5. The method of claim 2, wherein the service request information is at least one of the following information: status corresponding to the service request, a channel through which the customer makes the subscription, a way of receiving the subscription, service type, handling information, customer information, service level, impact level, urgency level and priority level.

6. The method of claim 2, wherein the business attribute information is at least one of the following information: service class, handling number, service level, priority level, status, a channel through which the customer makes the subscription, and a way of receiving the subscription.

7. The method of claim 6, wherein the business attribute information further comprises the number of the task being executed and the weight value of the task.

8. The method of claim 6 or 7, wherein, if more than one task needs to be executed for the service request according to the different business attribute information of the service request, the business attribute information further comprises an order sign identifying the execution order of the different tasks.

9. The method of claim 1, wherein the step of generating service request information comprises:
determining, according to task required to be executed for being currently processed business and pre-configured task corresponding to the business attribute information, the business attribute information corresponding to business being currently processed; and
generating and storing the service request information according to the business attribute information corresponding to the business being currently processed.

10. The method of claim 9, further comprising:
displaying the service request information corresponding to the different businesses to a business representative.

11. The method of claim 1, further comprising:
updating processing status of the service request; or
closing corresponding service request after the business processing is completed.

12. A system for processing service requests, comprising:
a service request processing unit, adapted to receive a business subscription, and generate a service request according to the subscribed business, wherein the service request carries service request information;
a service request task processing unit, adapted to acquire business attribute information required in business processing corresponding to the service request from the service request information carried in the service request generated by the service request processing unit, and determine a corresponding business processing unit according to the acquired business attribute information; and
a business processing unit, adapted to process the subscribed business.

13. The system of claim 12, wherein the service request processing unit is further adapted to update processing status of the service request, receive a business processing completion notification from the corresponding business processing unit, and close the corresponding service request.

14. The system of claim 12, wherein the service request task processing unit comprises:
a service request task configuration module, adapted to pre-configure the business attribute information items included in different businesses respectively, and pre-configure a task corresponding to the business attribute information;
a service request task parsing module, adapted to acquire the business attribute information required in business processing corresponding to the received service request from the service request information sent from the service request processing unit, according to the business attribute information items included in the different businesses pre-configured by the service request task configuration module; and
a service request task adaption module, adapted to determine task required to be executed for the corresponding business attribute information, according to the task corresponding to the business attribute information acquired by the service request task parsing module, and send a business request to the business processing unit.

15. The system of claim 14, wherein;
the service request task adaption module is further adapted to determine the business attribute information corresponding to the business being currently processed according to the task required to be executed for the business being currently processed, and a corresponding relationship between the pre-configured business attribute information and the task;
the service request task parsing module is further adapted to generate service request information, according to the business attribute information corresponding to the business being currently processed determined by the service request task adaption module; and
the service request processing unit is further adapted to store the service request information generated by the service request task parsing module, wherein the generated service request information corresponds to the currently activated business.

16. The system of claim 15, wherein the service request processing unit is further adapted to display the service request information corresponding to different businesses to a business representative.

17. The system of claim 14, wherein the business processing unit comprises:
a service adaption module, adapted to receive the service request from the service request task unit, and activate a page corresponding to the business; and
a business processing module, adapted to process the subscribed business.
